# EUROPÄISCHE PATENTSCHRIFT

(11) **EP 0 582 094 B1**
(45) Veröffentlichungstag und Bekanntmachung des Hinweises auf die Patenterteilung: **05.02.1997**
(21) Anmeldenummer: 93110700.7
(22) Anmeldetag: 05.07.1993
(51) Int. Cl.: C04B 18/02

(54) **Verfahren zum Einfärben von Baustoffen**
Process for colouring building materials
Procédé pour la coloration de matériaux de construction

(30) Priorität: 17.07.1992 DE 4223598
(43) Veröffentlichungstag der Anmeldung: 09.02.1994
(73) Patentinhaber: BAYER AG, 51368 Leverkusen (DE)
(72) Erfinder: van Bonn, Karl-heinz, Dr., D-47447 Moers (DE); Kröckert, Bernd, Dr., D-46487 Wesel (DE); Linde, Günter, Dr., D-47800 Krefeld (DE)

(56) Entgegenhaltungen:
- EP-A- 0 345 576
- EP-A- 0 518 152
- DE-A- 3 619 363
- CHEMICAL ABSTRACTS, vol. 114, no. 8, 25. Februar 1991, Columbus, Ohio, US; abstract no. 68035t, Seite 379 ;
- Ullmanns Encyclopädie der Technischen Chemie, 4. Auflage, B. 18, S.328-329
- Römpp Lexicon, 9.Auflage, S. 1636

## Beschreibung

Die vorliegende Erfindung betrifft ein Verfahren zum Einfärben von Baustoffen mit anorganischen Pigmenten in Form von Granulaten.

Zement- und kalkgebundene Baustoffe wie Putze, Kalksandsteine, Faserzementteile oder Betonwerksteine, insbesondere Dach- und Pflastersteine sowie Gehwegplatten, werden in der Regel, wenn sie farbig gestaltet werden sollen, mit anorganischen Pigmenten eingefärbt. So ist es allgemein in der Baustoffindustrie üblich, Eisenoxide oder Eisenoxidhydroxide als Rot-, Schwarz-, Braun- oder Gelbpigmente, Manganoxide als Braunschwarzpigmente, Chromoxide als Grünpigmente und Titandioxide als Weißpigmente einzusetzen. Als weitere Beispiele können Ruße als Schwarzpigmente, Nickel- oder Chromrutile als Gelbpigmente oder kobalthaltige Spinelle als Blau- und Grünpigmente, kupferhaltige Spinelle als Schwarzpigmente sowie die Mischkristalle aus Bariumsulfat und Bariummanganat als Blaupigmente genannt werden.

Zur Einfärbung von Betonwaren werden normalerweise die Pigmente im pulverförmigen Zustand eingesetzt. Sie haben in gemahlener Form den Vorteil der guten Dispergierbarkeit. Die vollständig homogene Verteilung solcher Pigmentpulver erfolgt in Betonmischungen in einer kurzen Zeit - bis zu wenigen Minuten. Der Nachteil dieser feinen Pulver besteht darin, daß sie kein gutes Fließverhalten aufweisen und sich beim Lagern häufig zusammenballen und verklumpen. Die genaue Dosierung wird hierdurch erschwert. Ein weiterer Nachteil einiger Pulver besteht darin, daß sie zum Stauben neigen.

Es ist bekannt, daß diese Nachteile bei der Pigmentierung von Betonteilen vermieden werden können, indem man anstelle trockener Pigmentpulver wäßrige Pigmentsuspensionen einsetzt. Die Verwendung derartiger 30 bis 70 Gew.-% Pigment enthaltenden Pasten oder Slurries hat sich nur zögernd durchsetzen können. Denn durch den zusätzlichen Wassergehalt können je nach Entfernung von Herstell- und Einsatzort erheblich höhere Transportkosten auftreten. Auch kann die mitgelieferte große Wassermenge nicht in jeder Betonzubereitung verarbeitet werden. Störend wirken kann ebenfalls der Gehalt an organischen Chemikalien.

Die Baustoffindustrie ist deshalb größtenteils bei dem Einsatz trockener Pigmentpulver geblieben. Der Verwendung von Pigmenten in Form von Mikrogranulaten stand bisher die Meinung entgegen, Granulate seien in Betonzubereitungen weniger gut dispergierbar. Schwer dispergierbare Pigmentagglomerate erfordern wesentlich längere Mischzeiten. Bei den normalen, in der Baustoffindustrie üblichen kurzen Mischzeit treten infolge schlechter Pigmentverteilung an der Betonoberfläche Strippen, Streifen oder Farbnester auf. Die im Pigment enthaltende Farbstärke kann sich nicht entfalten, so daß bei gleicher Farbintensität des Betonwerkstückes größere Pigmentmengen aufgewendet werden müssen.

In der DE-C 3 619 363 werden für die Einfärbung von Betonwaren Pigmentgranulate beschrieben, die im wesentlichen aus Pigment und einem oder mehreren die Dispergierung des Pigmentes im Beton fördernden Bindemittel(n) bestehen. Als Bindemittel, die in Beton als Dispergierhilfsmittel arbeiten, werden genannt: Alkylbenzolsulfonat, Alkylnaphthalinsulfonat, Ligninsulfonat, sulfatierte Polyglykolether, Melaminformaldehydkondensate, Naphthalinformaldehydkondensate, Gluconsäure, Salze von niedrigmolekularen teilveresterten Styrol-Maleinsäureanhydrid-Copolymerisaten und Copolymere aus Vinylacetat und Crotonsäure. Der Anteil im Pigment soll bevorzugt 2 bis 6 Gew.-% betragen.

Die genannten Dispergierhilfsmittel wirken in Betonmischungen als Verflüssiger. Sie beeinflussen das Wasser-Zement-Verhältnis und wirken sich auf die Betonkonsistenz aus.

Im anorganischen Pigment selbst stellen die zugesetzten Bindemittel als organische Substanzen Fremdkörper dar.

Gemäß DE-A 2 940 156 weist das anorganische Ausgangspigment einen Harzgehalt von mindestens 20 % auf. Eine Zerteilung entsprechender Granulate im Beton wird durch die Harzanteile hydrophob eingestellter Agglomerate sehr erschwert.

In der DE-C 3 918 694 wird ein Verfahren zur Einfärbung von Baustoffen mit anorganischen Pigmenten in Form von Mikrogranulaten beschrieben, bei dem den Pigmenten anorganische Verbindungen zugesetzt werden. Die so hergestellten Granalien zeichnen sich durch ein für eine leichte Dosierbarkeit gutes Fließverhalten sowie eine für die Handhabung geeignete Stabilität aus. Der Dispergieraufwand der hergestellten Granulate wechselt jedoch je nach Art des eingesetzten Bindemittels mehr oder weniger stark. Während beim Einsatz von Silikaten der Dispergieraufwand im Beton im allgemeinen mit der Zeit größer wird, erfordert Granulat mit Orthophosphat als Bindemittel bereits direkt nach der Herstellung eine intensivere Dispergierung.

Die Verarbeitung von Pigmentgranulaten erfordert jedoch Granulate, die über die bekannten Anforderungen für Fließverhalten und Stabilität hinaus gleichzeitig über eine gute Dispergierbarkeit verfügen.

In der EP-A-0 345 576 wird das Einfärben von feuerfesten Steinen mit Chromoxydgrün beschrieben, wobei eine wäßrige Suspension enthaltend das Pigment und eine Acrylsäure oder eine Polyphosphorsäure bzw. ein Alkali- oder Ammoniumphosphat eingesetzt wird.

Die Aufgabe der vorliegenden Erfindung besteht nun darin, ein Verfahren zum Einfärben von Baustoffen zur Verfügung zu stellen, welches Mikrogranulate mit verbesserten Dispergierverhalten gegenüber dem bisherigen Stand der Technik erzeugt.

Diese Aufgabe wurde gelöst durch ein Verfahren zur Einfärbung von Baustoffen mit anorganischen Pigmenten in Form von Granulaten, wobei die Pigmentgranulate aus einer Suspension, die aus einem oder mehreren Pigmenten und einem löslichen Phosphatsalz aus der Gruppe Natriumpyrophosphat (Na₄P₂O₇), Natriumtripolyphosphat (Na₅P₃O₁₀), Calgon 188 N (Natriumpolyphosphat mit vernetzten Ketten der Firma BK Ladenburg) und Natriumhexametaphosphat ([NaPO₃]₆ x H₂O) besteht, erhalten wurden. Die bevorzugt eingesetzte Menge an Phosphatsalz, gerechnet als Phosphat und bezogen auf Pigment, liegt zwischen 0,1 und 5 Gew.-%.

Überraschenderweise stellte sich heraus, daß bei Zusatz von Salzen kondensierter Phosphate die Dispergiereigenschaften der Granalien gegenüber dem bisherigen Stand der Technik deutlich verbessert werden. Gleichzeitig bleiben die für Granalien geforderten Eigenschaften (nicht staubend sowie handhabungsstabil) erhalten. Die Granalien können vorteilhaft in Form von Perlgranulaten z.B. in Sprühtrocknern oder Wirbelbett-Trocknern oder -Granulatoren erzeugt werden oder in Form von Aufbaugranulaten in Granuliertellern, Dragiertrommeln oder vergleichbaren, dem Fachmann bekannten Aggregaten erzeugt werden.

Bevorzugt sind Pigmente, die mehrwertige Kationen der Übergangsmetalle enthalten. Besonders bevorzugt sind Pigmente, die Titandioxid, Eisenoxid, Chromoxid, Manganoxid und/oder Zinkoxid enthalten. Ganz besonders bevorzugt sind dabei Eisenoxidpigmente. Gute Ergebnisse werden aber auch mit Mischphasenpigmenten erzielt.

Die besonders bevorzugte Menge des erfindungsgemäß zugesetzten löslichen Phosphatsalzes beträgt, auf Pigment bezogen 0,1 bis 2 Gew.-%.

Es hat sich gezeigt, daß die erfindungsgemäßen Granulate eine vom Pigment abhängige Partikelgröße nicht überschreiten sollten. Diese ist in erster Linie abhängig vom Schüttgewicht des Granulates, das wiederum ein Maß für die Porosität der Partikel darstellt. Die Porosität wiederum ist im Falle der Sprühgranulation abhängig vom Feststoffgehalt der pumpfähigen Ausgangssuspension vor dem Trocknen, die in Abhängigkeit von Teilchengröße und Teilchenform des Pigments stark schwanken kann. Als Maß für das Schüttgewicht dient das in der DIN 53 194 vom August 1957 definierte Stampfvolumen bzw. Stampfgewicht.

Die beim erfindungsgemäßen Verfahren eingesetzten Pigmentgranulate zeichnen sich dadurch aus, daß sie bei der Bestimmung des Stampfgewichtes nicht zerfallen. Bevorzugt weisen die erfindungsgemäßen Granulate ein Stampfgewicht zwischen 0,5 und 2,5 g/cm , besonders bevorzugt 0,8 bis 1,4 g/cm³ , auf.

Auch sollte die Partikelgröße nicht zu niedrig gewählt werden, da die feinen Anteile unter etwa 50 µm - abhängig von den Pigmenteigenschaften - für das Stauben eines trockenen Pulvers verantwortlich sind. Zudem wird mit Zunahme dieses Anteils die Riesel- oder Fließfähigkeit verschlechtert.

Die erfindungsgemäß durch Sprühtrocknen erhaltenen Granulate liegen in ihrer durchschnittlichen Partikelgröße zwischen 30 und 500 µm, vorzugsweise zwischen 100 und 300 µm, nach Aufbaugranulation erhaltene Granalien bevorzugt 100 µm bis 1 cm.

Die Pigmentgranulate dieser Partikelgröße stellen handhabungsstabile, nicht staubende, gut rieselfähige Pulver dar, die für die Einfärbung von Baustoffen gut geeignet sind. Im Gegensatz zur Offenbarung der DE-C 3 619 363 reichen die Scherkräfte in Betonzubereitungen auf die Granulate für die vollständige Pigmentdispergierung während des Mischzyklus aus. Besonders gute Ergebnisse werden mit Eisenoxid-Pigmenten erzielt. Das Stampfgewicht der Granulate kann je nach Pigment, Zusatzart und -menge und Wassergehalt der Suspension schwanken. Niedrige Stampfgewichte führen zu wenig stabilen Granulaten, hohe Stampfgewichte zu schlechter Dispergierbarkeit. Die erfindungsgemäßen Eisenoxidschwarzgranulate weisen bevorzugt Stampfgewichte zwischen 1,2 und 1,6 g/cm³, auf.

Die erfindungsgemäß eingesetzten Granulate enthalten üblicherweise von 0,1 bis 4 Gew.-% Wasser. Je nach Pigmentfeinheit und Teilchenform kann der Wassergehalt höher liegen, ohne daß die Rieselfähigkeit negativ beeinflußt wird.

Die Prüfung der Dispergierbarkeit in Beton erfolgte über die Farbstärkemessung an mit Weißzement hergestellten Prismen bei folgenden Daten: Zement-Quarzsand-Verhältnis 1:4, Wasser-Zement-Wert 0,35, Pigmentierungshöhe 1,2 %, bezogen auf Zement, verwendeter Mischer von RK Toni Technik, Berlin, mit 5 l Mischschüssel, Bauform 1551, Drehzahl 140 U/min (Ansatz: 500 g Zement). Nach je 80, 100, 150 und 200 s wurden 4 Mischungsproben (300 g) entnommen und Probekörper (5 x 10 x 2,5 cm) unter Druck (32,5 N/mm²) hergestellt. Härtung der Probekörper: 24 Std. bei 30°C und 95 % rel. Luftfeuchte mit anschließendem Trocknen 24 Std. bei 50°C. Farbdatenmessung über Hunterlab-Gerät: 3 Meßpunkte je Ober- und Unterseite, pro Pigmentmischung 24 Meßpunkte. Die erhaltenen Mittelwerte werden in bezug zu der mituntersuchten Pulverware mit 80 s Mischzeit (Endfarbstärke = 100 %) gesetzt.

Das Verfahren der Erfindung soll an folenden Beispielen näher erläutert werden, es ist darin jedoch keine Einschränkung auf die Beispiele zu sehen.

### Beispiel 1

Eine wäßrige Suspension von Eisenoxidrot (Bayferrox® 130, Handelsprodukt der Bayer AG), mit einem Feststoffgehalt von 60 Gew.-% und einem Zusatz von 1,3 % Natriumtripolyphosphat (Na₅P₃O₁₀), bezogen auf den Feststoff, wurde mit einem Vordruck von 23 bar über eine Düse in einen Sprühtrockner eingebracht. Die Düsenöffnung betrug 1,2 mm, und die Wirbelkammer hatte eine Dicke von 2,7 mm. Die Temperatur im Eintragsbereich lag bei 280°C und im Austrag bei 140°C.

Man erhält pro Stunde 65 kg Eisenoxidrotpigment in Form von Granalien mit einer durchschnittlichen Partikelgröße von 150 µm und einer Restfeuchte von 0,3 %. Das Stampfgewicht der Granalien betrug 1,20 g/cm³. Die Endfarbstärke wurde bei der Prüfung der Dispergierbarkeit in Beton nach 80 Sekunden erreicht.

### Beispiel 2

Eine wäßrige Suspension von Eisenoxidrot (Bayferrox® 110, Handelsprodukt der Bayer AG), mit einem Feststoffgehalt von 60 Gew.-% und einem Zusatz von 2,2 % Natriumhexametaphosphat ([NaPO₃]₆ x H₂O), bezogen auf den Feststoff, wurde mit einem Vordruck von 3 bar über eine Hohlkegeldüse (Sprühwinkel 30°, Bohrung 1,1 mm) in einen Sprühtrockner eingedüst. Vom Erdgas-Flächenbrenner traten die Verbrennungsgase mit einer Temperatur von 450°C in den Sprühtrockner. Die Austrittstemperatur der Gase lag bei 145°C.

Man erhält pro Stunde etwa 21 kg Eisenoxidrotpigment in Form von Granalien mit einer durchschnittlichen Partikelgröße von 150 µm und einer Restfeuchte von 0,8 %. Das Stampfgewicht der Granalien betrug 1,25 g/cm³. Die Endfarbstärke wurde bei der Prüfung der Dispergierbarkeit in Beton nach 80 Sekunden erreicht.

### Beispiel 3

Eine wäßrige Suspension mit ca. 50 Gew.-% Fe3O4 (Bayferrox® 318, Handelsprodukt der Bayer AG) und 1,4 % Natriumpyrophosphat (Na₄P₂O₇), bezogen auf den Feststoff, gelangte mit einem Druck von 0,5 bar auf die Verteilerscheibe eines Scheibensprühtrockners. Die Umfanggeschwindigkeit der Scheibe betrug 88 m/s. Vom Erdgas-Flächenbrenner traten die Verbrennungsgase mit einer Temperatur von 380°C in den Sprühtrockner. Die Austrittstemperatur der Gase lag bei 105°C.

Es wurden stündlich 95 kg Eisenoxidschwarzpigment in mechanisch stabiler Granulatform mit einer durchschnittlichen Partikelgröße von 100 µm und einer Restfeuchte von 0,5 Gew.-% erhalten. Das Stampfgewicht der Granulate betrug 1,14 g/cm³. Die Prüfung auf Dispergierbarkeit in Beton durch Messung der Farbstärke ergab eine Endfarbstärke bei 80 Sekunden Mischzeit.

### Beispiel 4

Eine wäßrige Suspension von Eisenoxidgelb (Bayferrox® 420, Handelsprodukt der Bayer AG), mit einem Feststoffgehalt von 35 Gew.-% und einem Zusatz von 1,1 % Calgon 188 N (Handelsprodukt der Firma BK Ladenburg), bezogen auf den Feststoff, wurde mit einem Vordruck von 3 bar über eine Hohlkegeldüse (Sprühwinkel 30°, Bohrung 1,1 mm) in einen Sprühtrockner eingedüst. Vom Erdgas-Flächenbrenner traten die Verbrennungsgase mit einer Temperatur von 450°C in den Sprühtrockner. Die Austrittstemperatur der Gas lag bei 145°C.

Man erhält pro Stunde etwa 21 kg Eisenoxidgelbpigment in Form von Granalien mit einer durchschnittlichen Partikelgröße von 150 µm und einer Restfeuchte von 0,8 %. Das Stampfgewicht der Granalien betrug 0,54 g/cm³. Die Entfarbstärke wurde bei der Prüfung der Dispergierbarkeit in Beton nach 80 Sekunden erreicht.

### Vergleichsbeispiel 1

Eine wäßrige Eisenoxidrotsuspension wird wie in Beispiel 1 verarbeitet. Als Zusatzstoff wird statt Natriumtripolyphosphat 1,7 % handelsübliches Natriumorthophosphat (Na₃PO₄) eingesetzt. Die Farbstärke erreichte auch nach 100 Sekunden Dispergierzeit nur 38 % der mituntersuchten Pulverware. Nach 200 Sekunden Dispergierzeit konnte die Farbstärke nur geringfügig auf 56 % der Pulverware gesteigert werden.

### Vergleichsbeispiel 2

Eine wäßrige Eisenoxidrotsuspension wird wie in Beispiel 2 verarbeitet. Als Zusatzstoff wird statt Natriumhexametaphosphat 3,5 % Natriumorthophosphat (Na₃PO₄) eingesetzt. Nach 100 Sekunden Dispergierzeit wurde lediglich eine Farbstärke von 30 % im Beton erreicht.

### Vergleichsbeispiel 3

Wie in Beispiel 3 beschrieben, wird eine Eisenoxidschwarzsuspension verarbeitet. Statt Natriumpyrophosphat wird Natriumorthophosphat (Na₃PO₄) der Suspension zugesetzt. Die Einarbeitung in Betn bei einer Dispergierzeit von 100 Sekunden ergab eine Farbstärke von 88 %.

### Vergleichsbeispiel 4

Wie in Beispiel 4 beschrieben, wird eine Eisenoxidschwarzsuspension verarbeitet. Anstelle von Calgon 188 N wird jedoch Natriumorthophosphat (Na₃PO₄) der Zusatzstoff zugesetzt. Die Farbstärke des Granulats im Beton betrug nach 100 Sekunden Dispergierzeit 90 % der Endfarbstärke.

## Patentansprüche

1. Verfahren zum Einfärben von Baustoffen mit anorganischen Pigmenten in Form von Granulaten, dadurch gekennzeichnet, daß die Pigmentgranulate aus einer Suspension, die aus einem oder mehreren Pigmenten und Natriumpyrophosphat (Na₄P₂O₇), Natriumtripolyphosphat (Na₅P₃O₁₀), Calgon 188 N (Natriumpolyphosphat mit vernetzten Ketten der Firma BK Ladenburg) oder Natriumhexametaphosphat ([NaPO₃]₆ x H₂O) besteht, erhalten wurden.

2. Verfahren gemäß Anspruch 1, dadurch gekennzeichnet, daß der Gehalt an löslichen Phosphatsalzen 0,1 bis 5 Gew.-%, vorzugsweise 0,5 bis 2 Gew.-% beträgt, gerechnet als Phosphat und bezogen auf Pigment.

3. Verfahren gemäß einem der Ansprüche 1 oder 2, dadurch gekennzeichnet, daß die Granulate durch Sprühtrocknen erhalten wurden.

4. Verfahren gemäß einem der Ansprüche 1 oder 2, dadurch gekennzeichnet, daß die Granulate durch Aufbaugranulation erhalten wurden.

5. Verfahren gemäß einem oder mehreren der Ansprüche 1 bis 4, dadurch gekennzeichnet, daß als Pigmente solche aus der Gruppe Titanoxid, Eisenoxid, Chromoxid, Manganoxid und/oder Zinkoxid eingesetzt werden.

6. Verfahren gemäß Anspruch 5, dadurch gekennzeichnet, daß als Pigmente Eisenoxidpigmente eingesetzt werden.

7. Verfahren gemäß Anspruch 6, dadurch gekennzeichnet, daß die Eisenoxidpigmente Eisenoxidrotgranulate mit Stampfgewichten zwischen 1,2 und 1,6 g/cm³ sind.

8. Verfahren gemäß Anspruch 6, dadurch gekennzeichnet, daß die Eisenoxidpigmente Eisenoxidschwarzgranulate mit Stampfgewichten zwischen 0,8 und 1,4 g/cm³ sind.

9. Verfahren gemäß einem oder mehreren der Ansprüche 1 bis 5, dadurch gekennzeichnet, daß die Pigmente anorganische Mischphasenpigmente sind.

## Claims

1. A process for colouring building materials using inorganic pigments in the form of granules, characterised in that the pigment granules have been obtained from a suspension consisting of one or more pigments and sodium pyrophosphate (Na₄P₂O₇), sodium tripolyphosphate (Na₅P₃O₁₀), Calgon 188 N (sodium polyphosphate containing cross-linked chains, from the firm BK Ladenburg) or sodium hexametaphosphate ([NaPO₃]₆ x H₂O).

2. The process according to claim 1, characterised in that the content of soluble phosphate salts is from 0.1 to 5 wt.%, preferably from 0.5 to 2 wt.%, calculated as phosphate and referred to the pigment.

3. The process according to either of claims 1 or 2, characterised in that the granules have been obtained by spray drying.

4. The process according to either of claims 1 or 2, characterised in that the granules have been obtained by pelletising.

5. The process according to one or more of claims 1 to 4, characterised in that the pigments used are those from the group comprising titanium dioxide, iron oxide, chromium oxide, manganese oxide and/or zinc oxide.

6. The process according to claim 5, characterised in that the pigments used are iron oxide pigments.

7. The process according to claim 6, characterised in that the iron oxide pigments are iron oxide red granules having tamped densities of between 1.2 and 1.6 g/cm³.

8. The process according to claim 6, characterised in that the iron oxide pigments are iron oxide black granules having tamped densities of between 0.8 and 1.4 g/cm³.

9. The process according to one or more of claims 1 to 5, characterised in that the pigments are inorganic mixed phase pigments.

## Revendications

1. Procédé pour colorer des matériaux de construction à l'aide de pigments minéraux à l'état de granulés, caractérisé en ce que les granulés de pigment ont été obtenus à partir d'une suspension consistant en un ou plusieurs pigments et du pyrophosphate de sodium (Na₄P₂O₇), du tripolyphosphate de sodium (Na₅P₃O₁₀), du Calgon 188 N (polyphosphate de sodium à chaînes réticulées de la firme BK Ladenburg, Allemagne) ou de l'hexamétaphosphate de sodium ([NaPO₃]₆ x H₂O).

2. Procédé selon la revendication 1, caractérisé en ce que la teneur en phosphates solubles est de 0,1 à 5 % en poids, de préférence de 0,5 à 2 % en poids, exprimée en phosphate et rapportée au pigment.

3. Procédé selon l'une des revendications 1 ou 2, caractérisé en ce que les granulés ont été obtenus par séchage-atomisation.

4. Procédé selon l'une des revendications 1 ou 2, caractérisé en ce que les granulés ont été obtenus par granulation d'accumulation.

5. Procédé selon l'une ou plusieurs des revendications 1 à 4, caractérisé en ce que les pigments mis en oeuvre sont choisis dans le groupe consistant en l'oxyde de titane, l'oxyde de fer, l'oxyde de chrome, l'oxyde de manganèse et/ou l'oxyde de zinc.

6. Procédé selon la revendication 5, caractérisé en ce que les pigments mis en oeuvre sont des pigments d'oxydes de fer.

7. Procédé selon la revendication 6, caractérisé en ce que les pigments d'oxyde de fer sont des granulés d'oxyde de fer rouge à des densités tassées de 1,2 à 1,6 g/cm³.

8. Procédé selon la revendication 6, caractérisé en ce que les pigments d'oxydes de fer sont des granulés d'oxyde de fer noir à des densités tassées de 0,8 à 1,4 g/cm³.

9. Procédé selon l'une ou plusieurs des revendications 1 à 5, caractérisé en ce que les pigments sont des pigments minéraux à phases mélangées.
